# EUROPEAN PATENT SPECIFICATION

(11) **EP 4 089 880 B1**
(45) Date of publication and mention of the grant of the patent: **24.12.2025**
(21) Application number: 22172296.0
(22) Date of filing: 09.05.2022
(51) Int. Cl.: H02J 50/10, H02J 50/80, H04B 5/77, H04L 27/02, H04L 27/10

(54) **RFID AND QI DEVICE**
RFID- UND QI-VORRICHTUNG
DISPOSITIF RFID ET QI

(30) Priority: 11.05.2021 FR 2104962
(43) Date of publication of application: 16.11.2022
(73) Proprietor: STMicroelectronics Ltd, Kowloon 999077 (HK); STMicroelectronics (Rousset) SAS, 13790 Rousset (FR); STMicroelectronics razvoj polprevodnikov d.o.o., 1000 Ljubljana (SI)
(72) Inventor: CORDIER, Nicolas, 13080 AIX-EN-PROVENCE (FR); CHEN, Walk, 11494 TAIPEI (TW); BLAHA, Karel, 32300 PLZEN (CZ)
(74) Representative: Cabinet Beaumont

(56) References cited:
- US-A1- 2006 049 916
- US-A1- 2019 363 584
- US-A1- 2019 386 513

## Description

### Technical field

The present disclosure relates generally to electronic devices and more precisely to electronic devices integrating RFID (Radio Frequency Identification) technology.

### Background art

The document US 2006/049916 describes a communication device and portable electronic instrument providing this communication device.

The document US 2019/386513 describes a b-directional communication in wireless power transmission.

Contactless technologies are very widespread and are widely used in transport and access control applications. The trend is to group, as much as possible, functionalities (traditionally hosted by contactless cards or IC cards) on a single device such as a mobile phone.

The document US 2019/363584 A1 describes a device using such contactless technologies.

### Summary of Invention

There is a need to improve contactless access devices and more particularly access devices equipped with RFID technology.

One embodiment addresses all or some of the drawbacks of known access devices.

One embodiment provides a device according to claim 1.

One embodiment provides a method according to claim 2.

### Brief description of drawings

The foregoing features and advantages, as well as others, will be described in detail in the following description of specific embodiments given by way of illustration and not limitation with reference to the accompanying drawings, in which:
Figure 1 shows, very schematically, an example of a communication system comprising a device including the Qi technology, to which apply, by way of example, embodiments described;
Figure 2 represents a timing diagram illustrating an operating mode of the device illustrated in Figure 1;
Figure 3 represents a flowchart illustrating a part of the timing diagram illustrated in figure 2;
Figure 4 represents an example of a part of the timing diagram illustrated in figure 2;
Figure 5 represents, schematically and in the form of blocks, an embodiment of the communication circuit of the device illustrated in Figure 1;
Figure 6 represents a first example of operation of the circuit illustrated in Figure 5;
Figure 7 represents another example of a part of the timing diagram illustrated in figure 2;
Figure 8 represents a second example of operation of the circuit illustrated in Figure 5;
Figure 9 represents another example of a part of the timing diagram illustrated in figure 2;
Figure 10 represents a third example of operation of the circuit illustrated in Figure 5;
Figure 11 represents a fourth example of operation of the circuit illustrated in Figure 5;
Figure 12 represents a fifth example of operation of the circuit illustrated in Figure 5;
Figure 13 represents a sixth example of operation of the circuit illustrated in Figure 5; and
Figure 14 represents another example of a part of the timing diagram illustrated in figure 2.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the circuits which are qualified by there respective functions are not structurally detailed.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

In the present description, it is proposed to take advantage of the fact that Qi technology (which corresponds to a standard developed by the Wireless Power Consortium for the transmission of wireless energy) is very widely developed in new models of smartphones. Qi technology is particularly interesting because it works for a frequency band including the Low Frequency (LF) (100 kHz to 200 kHz). In the present description, it is thus sought to establish LF communications by RFID technology by using some of the components of the circuit dedicated to the Qi technology.

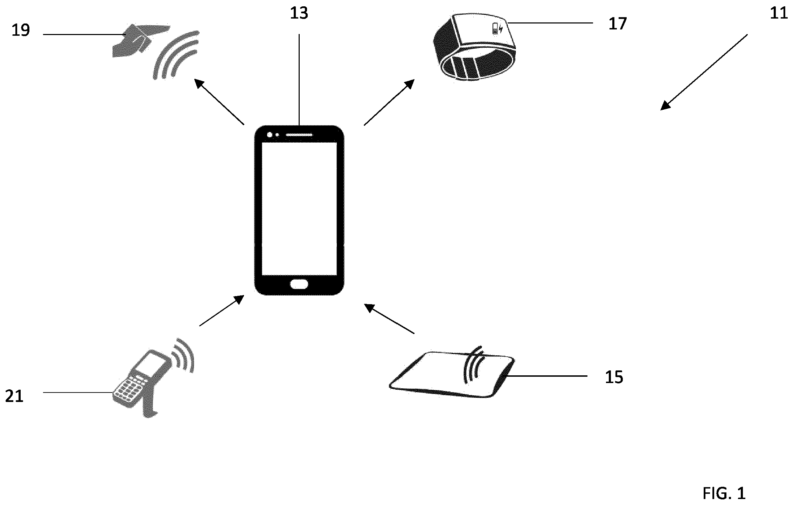

Figure 1 shows, very schematically, an example of a communication system comprising a device including the Qi technology, to which apply, by way of example, the disclosed embodiments.

The system 11 illustrated in figure 1 comprises an electronic device 13 adapted to communicate with other electronic apparatuses/devices with Qi technology and with RFID technology.

According to an embodiment, the device 13 is a mobile phone, for example a smartphone, or a tablet computer.

According to the embodiment illustrated in Figure 1, the device 13 is adapted to be charged by a Qi charger platform 15 (chargeable mode) or to charge another electronic apparatus 17 equipped with the Qi technology (charger mode). In other words, the device 13 is adapted, depending on its external environment, to switch from a charger mode to a chargeable mode. The device 13 can then operate in charger mode and charge an apparatus present in its environment, or in chargeable mode and be charged by a charger apparatus present in its environment.

According to the embodiment illustrated in Figure 1, the device 13 is also adapted to communicate with an RFID apparatus configured in card mode 19 and an RFID apparatus configured in reader mode 21. In other words, the device 13 is adapted, depending on its external environment, to switch from a reader mode to a card mode. The device 13 can then operate in reader mode and communicate with an apparatus in card mode present in its environment, or in card mode and communicate with an apparatus in reader mode present in its environment.

According to an application example, the embodiments apply to transport systems and to access control, for example, to doors of buildings equipped with Low Frequency (LF) technology.

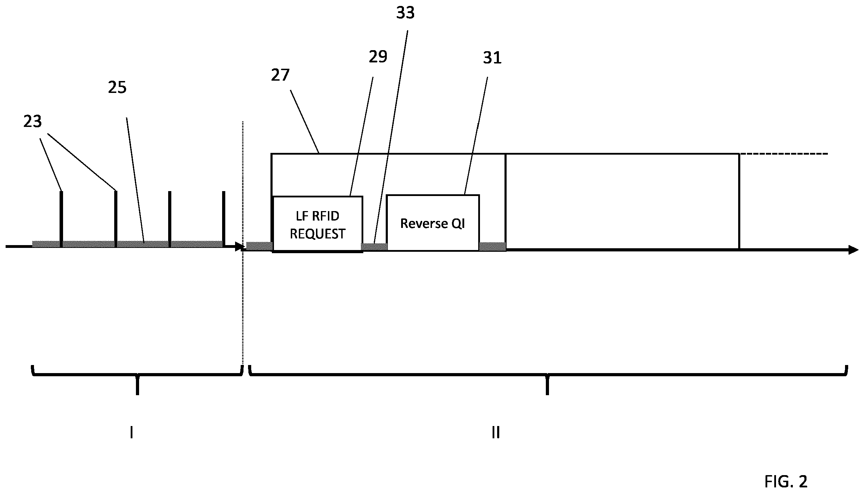

Figure 2 represents a timing diagram illustrating an operating mode of the device illustrated in Figure 1.

When the device 13 illustrated in figure 1 is not communicating, it is in low power mode or standby, in order to reduce the power consumption.

When the device 13 is in standby, it should still be capable of detecting the presence of an RFID reader, an RFID card, a chargeable apparatus or a charger apparatus.

The timing diagram illustrated in Figure 2 comprises two successive parts I and II, part I corresponding to an operation when the device 13 is in standby mode and part II corresponding to an operation when the device 13 is in normal mode called polling mode.

According to the embodiment illustrated in Figure 2, when the device 13 is in standby mode (part I), it "probes" its environment by short periodic emission pulses 23. Two pulses 23 are, by example, separated by a time interval 25. A pulse 23 corresponds to a short field emission by the device 13 to detect a possible apparatus configured in card mode or a chargeable apparatus present in its field. In the event of such detection, the device 13 then wakes from standby and switches to normal mode (part II). The detection implements an analysis of the electrical quantities specific to these pulses 23 such as amplitude or phase, these quantities varying if an apparatus configured in card mode or a chargeable apparatus is nearby.

During intervals 25, the device 13 is in listener mode for apparatuses in reader mode or chargeable or charger apparatuses within range.

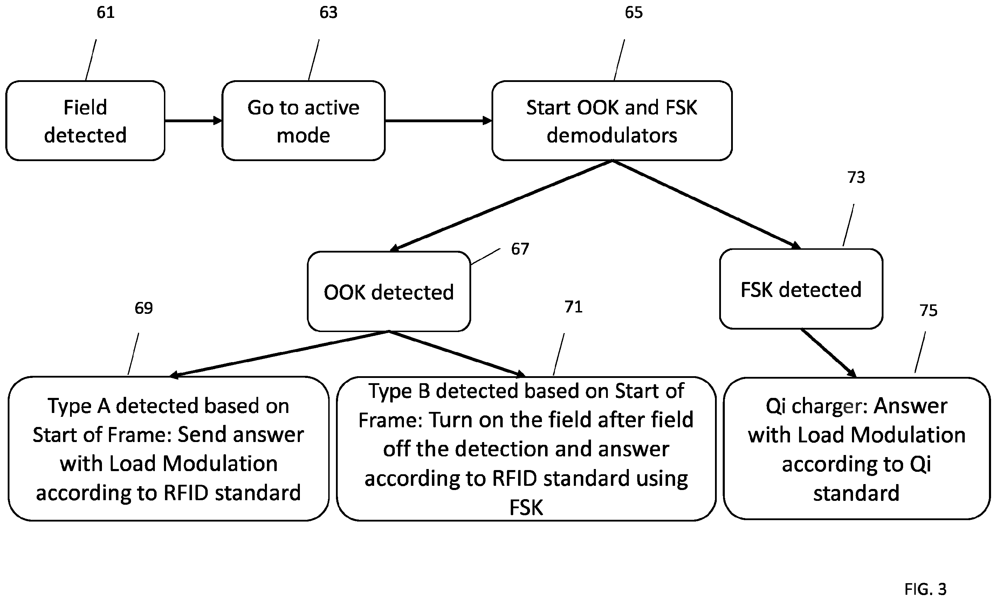

Figure 3 represents a flowchart illustrating a part of the timing diagram illustrated in figure 2. More precisely, the flowchart corresponds to an example of implementation of listener mode, i.e. during intervals 25.

In case the device 13 detects a field (block 61, Field detected), it activates (block 63, Go to active mode), by exiting the standby mode and responds to the reader or Qi chargeable/charger apparatus depending on the detected technology.

More precisely, the device 13 comprises two demodulators, one demodulator adapted to demodulate an On-Off Keying (OOK) modulation and one demodulator adapted to demodulate a Frequency Shift Keying (FSK) modulation. Both demodulators are activated when the device 13 detects an external field during an interval 25. The device 13 is in active mode when both demodulators are started (block 65, Start OOK and FSK demodulators).

In order to respond to the reader or Qi apparatus, the device 13 detects the technology of the apparatus within the range, and more precisely the type of modulation it is based on. Thus, the device 13 detects the On-Off Keying (OOK) modulation (block 67, OOK detected) or the Frequency Shift Keying (FSK) modulation (block 73, FSK detected).

During this detection, both demodulators operate in parallel (simultaneously).

The response of the device 13 is adapted to the detected modulation type of the apparatus.

If a type A is detected, based on start of frame, in addition to the OOK modulation, the device 13 responds by sending an answer with a load modulation according to RFID standard (block 69, Type A detected based on Start of Frame: Send answer with Load Modulation according to RFID standard).

If a type B is detected, based on start of frame, in addition to the OOK modulation, the device 13 responds by turning on the field after field off the detection and by answering according to RFID standard using FSK modulation (block 71, Type B detected based on Start of Frame: Turn on field after field off detection and answer according to RFID standard using FSK).

If an FSK modulation is detected, the device 13 responds by answering with the load modulation according to Qi standard (block 75, Qi charger: Answer with Load Modulation according to Qi standard).

The above operation in listener mode corresponds to selectively activate the RFID mode or the Qi mode based on the results provided by the demodulators operating in parallel. Once this activation is done, only one demodulator is used (operates) for the communication with the external device depending on the selected RFID/Qi mode.

According to the embodiment illustrated in Figure 2, in normal mode (part II), the device 13 emits periodic interrogation frames 27, during which it generates a field intended for card mode apparatuses or chargeable apparatuses within range. The interrogation frame 27 can be repeated several times before going back to standby mode in case any card mode apparatuses answered. The aim of these periodic frames (polling loop) is, for the device 13 operating in Reader/Charger mode, to determine the type of external apparatus based on the type of emitted frames to which this external apparatus respond. Between the polling loops, the device operates in listener mode as described with Figure 2.

A frame 27 is, for example, made up of a succession of two emission bursts 29 and 31, burst 29 (LF RFID REQUEST) being configured to generate a field understandable by card mode apparatuses and burst 31 (Reverse Qi) being configured to generate a field understandable by chargeable apparatuses.

In other words, during a frame 27, the device 13 successively implements two emission bursts 29 and 31 each representative of a type of technology (Qi or RFID). The types of technologies targeted by the bursts are successively RFID technology and Qi technology.

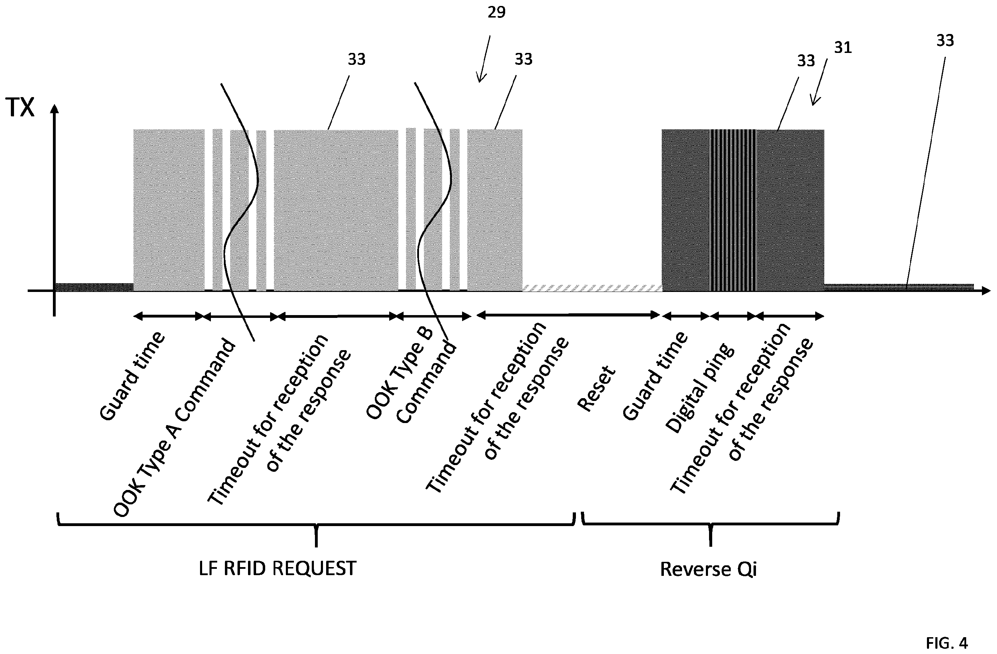

Figure 4 represents an example of expansion of part of the timing diagram illustrated in figure 2. More precisely, Figure 4 represents a timing diagram of a frame 27.

According to the embodiment illustrated in Figure 4, the burst 29 comprises a guard time (Guard time) followed by two successive requests each representative of type A or type B. Each of the first request (OOK Type A Command) and the second request (OOK Type B Command) are followed by a waiting time 33 (Timeout for reception of the response). During the waiting time 33 the device 13 waits for the response of type A card mode apparatuses in its field or type B card mode apparatuses.

According to the embodiment illustrated in Figure 4, the burst 29 and the burst 31 are separated by a reset time (Reset).

According to the embodiment illustrated in Figure 4, the burst 31 comprises a guard time (Guard time) followed by one request representative of the Qi technology (Digital ping) . The request is followed by a waiting time 33 (Timeout for reception of the response). During the waiting time 33 the device 13 waits for the response of apparatuses to charge in its field.

In polling mode, the demodulators operate in series (successively).

According to the embodiment illustrated in Figure 4, before the burst 29, between bursts 29 and 31, and after the burst 31, the device 13 is in listener mode and operates as describes above with Figure 2.

According to one embodiment, each pulse 23 has a duration of between 50 µs and 100 µs, for example of the order of 70 µs and each burst 29, 31 has a duration of between 50 ms and 100 ms, for example of the order of 70 ms. The interval 25 and the wait time 33 have a duration of between 200 ms and 1 s.

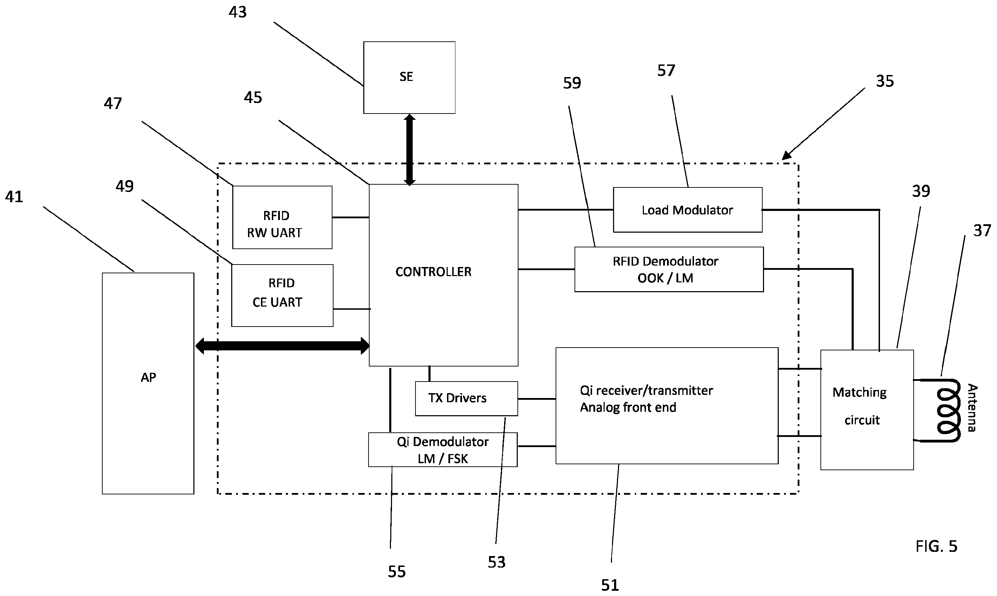

Figure 5 represents, schematically and in the form of blocks, an embodiment of the communication circuit 35 of the device 13 illustrated in Figure 1.

The communication circuit 35 is coupled to an antenna 37 (Antenna) via matching circuit 39 (Matching circuit). The communication circuit 35 can also be coupled to an application processor 41 (AP) and/or to a secure element 43 (SE).

According to the embodiment shown in Figure 3, the communication circuit 35 comprises:
- a controller 45 (CONTROLLER), for example, a microcontroller or microprocessor for managing the exchanges between the different elements of the circuit 35 ;
- an RFID reader wireless receiver/transmitter 47 (RFID RW UART) coupled to the controller 45 for coding/decoding data in reader mode ;
- an RFID card emulation receiver/transmitter 49 (RFID CE UART) coupled to the controller 45 for coding/decoding data in card mode;
- a Qi receiver/transmitter analog front end 51 (Qi receiver/transmitter Analog font end) coupled to the matching circuit 39, for shaping the signals received and to be transmitted;
- an transmission/emission circuit 53 (TX Drivers) for amplifying, in emission, the signals provided by the controller 45 to the Qi analog front end 51;
- a frequency demodulator and load modulator/demodulator (also called backscattering) 55 (Qi Demodulator LM/FSK), between the Qi analog front end 51 and the controller 45, for frequency demodulating the signal received by the Qi analog front end 51;
- a load modulator 57 (Load Modulator), between the controller 45 and the matching circuit 39, to impact an external field in RFID card mode or in Qi charger mode; and
- an amplitude demodulator and load modulator/demodulator 59 (RFID Demodulator OOK/LM), between the matching circuit 39 and the controller 45, adapted to demodulate the received signal in respectively RFID card and reader modes.

As mentioned in relation with figures 2 to 4, when the device operates in listener mode, both demodulators 55 and 59 are active and operate in parallel, i.e. simultaneously, while when the device operates in polling mode, the demodulators 55 and 59 operates (timely) in series, i.e. successively.

According to an embodiment, the controller 45 comprises coding circuits dedicated to the Qi technology.

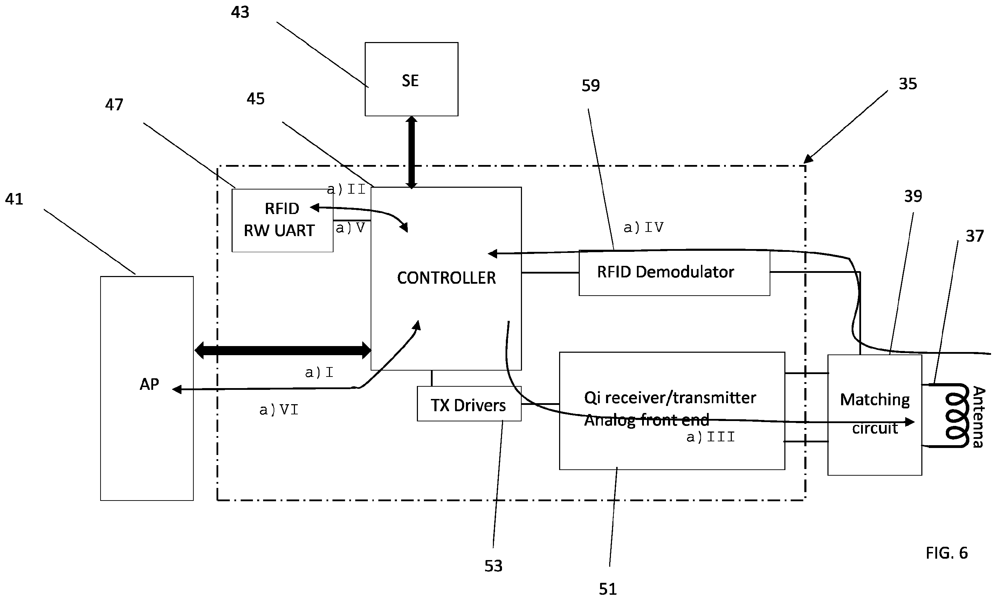

Figures 6 to 14 show six examples of operating process of the circuit 35 depending on the external apparatus that it detects or that detects it. In each of Figures 6 to 14, the components not being solicited during the illustrated example of use have not been shown.

Figure 6 illustrates circuit 35 while device 13 detects and communicates, in reader mode, with an LF apparatus of type A configured in card mode.

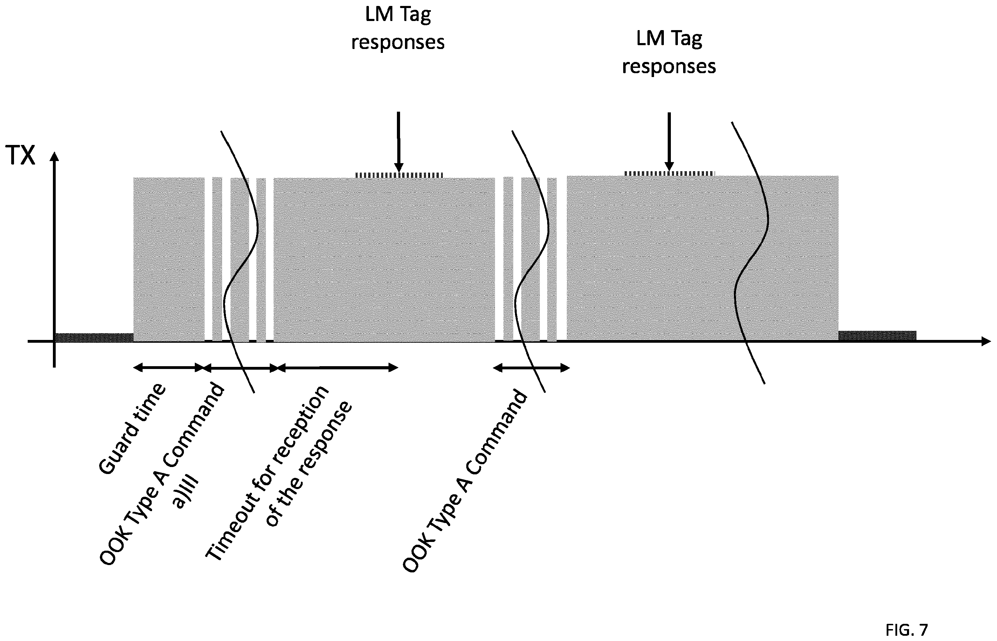

Figure 7 represents a time diagram of an example of frame 27 in the circuit 35 of Figure 6.

According to the embodiment illustrated in Figures 6 and 7, when the device 13 detects an external type A apparatus configured in card mode and communicating in Low Frequency (LF), the device 13 operates in reader mode.

In such a mode, the application processor runs (link a)I) the Low frequency RFID reader wireless application using the controller 45.

The controller 45 uses the RFID reader wireless receiver/transmitter 47 to construct the low frequency RFID reader wireless commands or LF RFID RW commands (link a)II).

The controller 45 uses the TX drivers 53 and the analog front end 51 to generate the LF RFID RW commands according to the A type, using an On-Off Keying modulation (OOK Type A command a)III, Figure 7) (link a)III).

The responses (LM Tag responses, Figure 7) from the external apparatus in card mode to the device 13 are demodulated using a load demodulation via the RFID Demodulator 59 (link a)IV).

According to an embodiment, not shown, the responses from the external apparatus in card mode to the device 13 are demodulated by the Qi Demodulator 55.

The controller 45 then uses the RFID reader wireless receiver/transmitter 47 to decode the external apparatus in card mode responses (link a)V) and to forward the corresponding data to the application processor 41 (link a)VI).

During this operating process, the controller 45 may use the secure element 43 to perform any required cryptographic operation.

After establishing contact between the device 13 and the apparatus within the range, they both communicate by sending successive commands and responses.

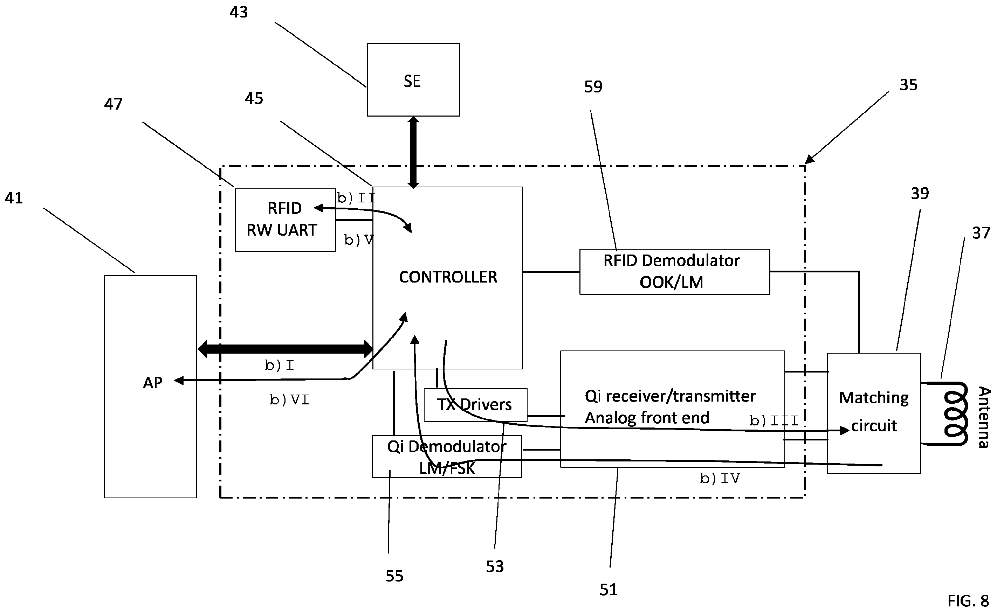

Figure 8 illustrates circuit 35 while device 13 detects and communicates, in reader mode, with an LF apparatus of type B configured in card mode.

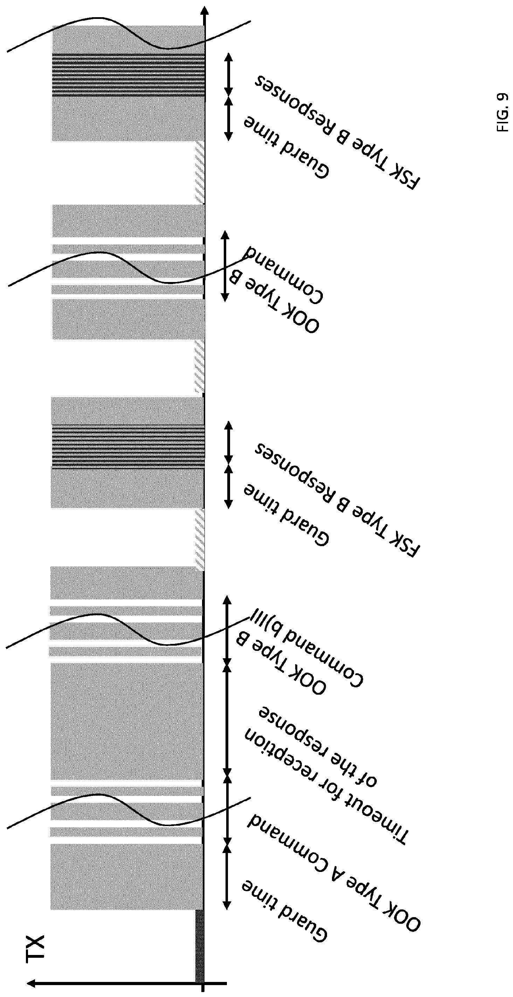

Figure 9 represents a time diagram of an example of frame 27 in the circuit 35 of Figure 8.

According to the embodiment illustrated in Figure 8, the detection of an external B type apparatus configured in card mode is made after a lack of response to a request in A type.

According to the embodiment illustrated in Figure 8, when the device 13 detects an external type B apparatus configured in card mode and communicating in LF, the device 13 operates in reader mode.

In such a mode, the application processor runs (link b)I) the Low frequency RFID reader wireless application using the controller 45.

The controller 45 uses the RFID reader wireless receiver/transmitter 47 to build the Low frequency RFID reader wireless commands or LF RFID RW commands (link b)II).

The controller 45 uses the TX drivers 53 and the analog front end 51 to generate the LF RFID RW commands according to the B type, by the generation of a magnetic field, using an On-Off keying amplitude modulation (OOK Type B Command b)III, Figure 9) (link b)III).

After generating the command, the device 13 stop its magnetic field and wait for an answer from the external apparatus.

The responses from the external apparatus in card mode to the device 13 (FSK Type B Responses, Figure 9) are demodulated using a frequency shift keying demodulation (FSK demodulation) via the Qi demodulator 55 (link b)IV).

The controller 45 then uses the RFID reader wireless receiver/transmitter 47 to decode the external apparatus in card mode responses (link b)V) and to forward the corresponding data to the application processor 41 (link b)VI).

During this operating process, the controller 45 may use the secure element 43 to perform any required cryptographic operation.

After establishing contact between the device 13 and the apparatus within the range, they both communicate by sending successive commands and responses.

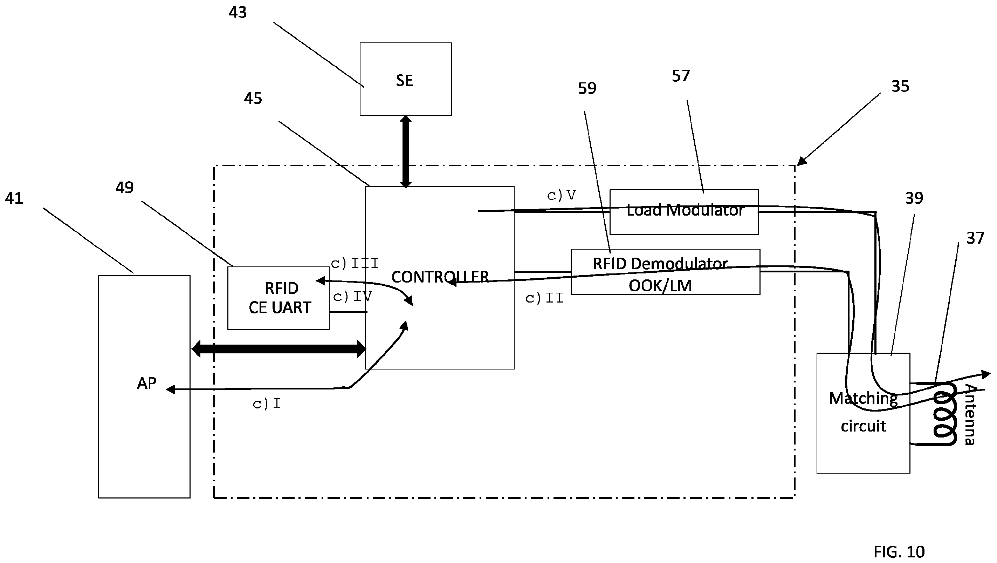

Figure 10 illustrates circuit 35 while device 13 detects and communicates, in card mode, with an LF apparatus of type A configured in reader mode.

According to the embodiment illustrated in Figure 10, when the device 13 detects an external type A apparatus configured in reader mode and communicating in LF, the device 13 operates in card mode.

In such a mode, the application processor runs (link c)I) the Low frequency RFID card emulation application using the controller 45.

The commands from the external apparatus in reader mode to the device 13 are demodulated via the RFID demodulator 59 (link c)II), using an on-off keying amplitude demodulation.

The controller 45 then uses the RFID card emulation receiver/transmitter 49 to decode the external apparatus commands (link c)III) and uses the RFID card emulation receiver/transmitter 49 to build the responses (link c)IV).

The controller 45 uses the load modulator 57 to generate the response according to the A type with the apparatus in reader mode via the matching circuit 39, using an FSK modulation (link c)V).

During this operating process, the controller 45 may use the secure element 43 to perform any required cryptographic operation.

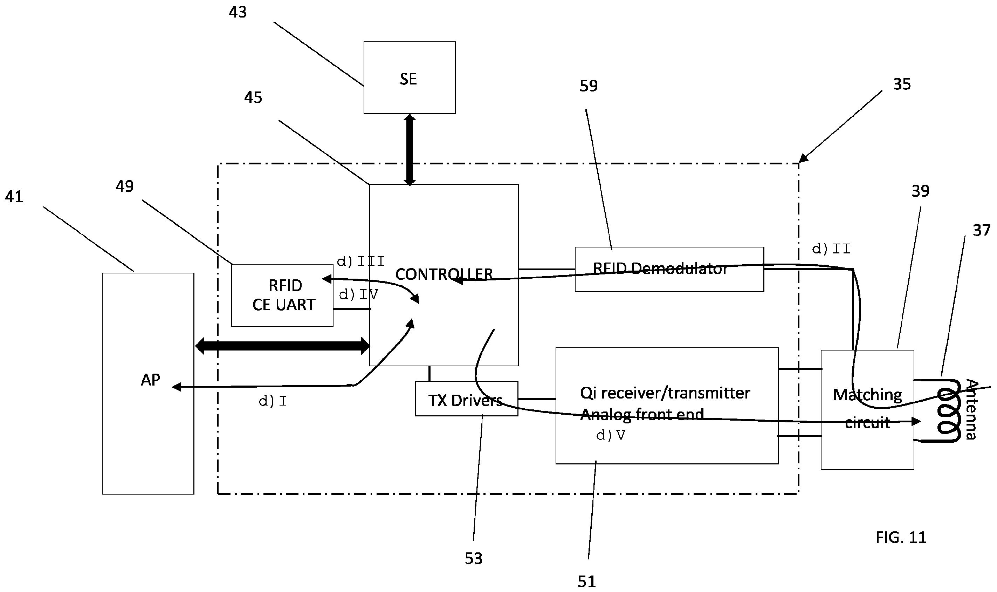

Figure 11 illustrates circuit 35 while device 13 detects and communicates, in card mode, with an LF apparatus of type B configured in reader mode.

According to the embodiment illustrated in Figure 11, when the device 13 detects an external type B apparatus configured in reader mode and communicating in LF, the device 13 operates in card mode.

In such a mode, the application processor runs (link d)I) the Low frequency RFID card emulation application using the controller 45.

The commands from the external apparatus in reader mode to the device 13 are demodulated using an on-off keying demodulation via the RFID demodulator 59 (link d)II).

The controller 45 then uses the RFID card emulation receiver/transmitter 49 to decode the external apparatus commands (link d)III) and uses the RFID card emulation receiver/transmitter 49 to build the responses (link d)IV).

The controller 45 uses the TX drivers 53 and the analog front end 51 to generate the response according to the B type with the apparatus in reader mode via the matching circuit 39, using an Frequency-Shift Keying modulation (FSK modulation) (link d)V).

During this operating process, the controller 45 may use the secure element 43 to perform any cryptographic operation required.

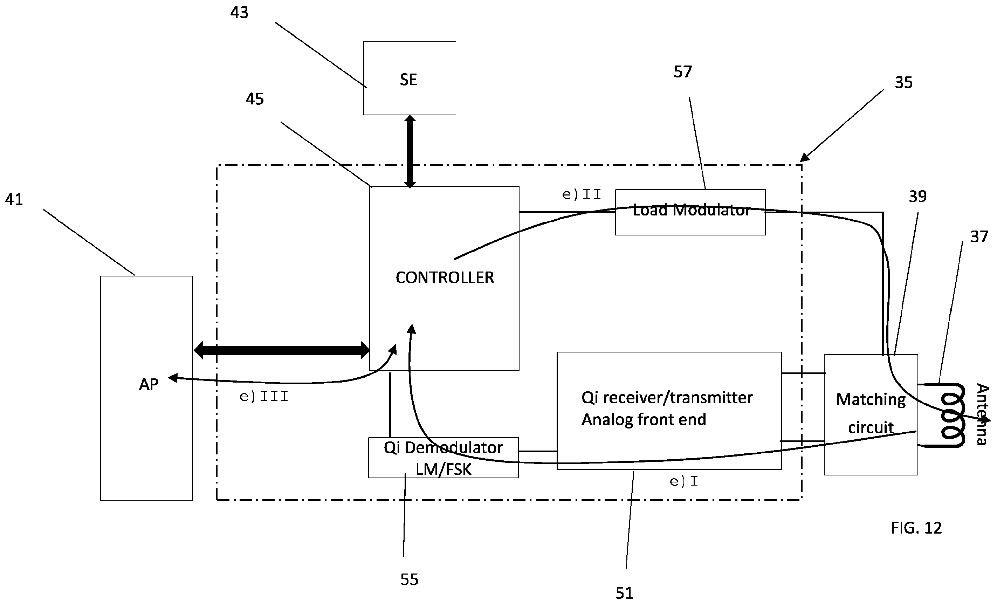

Figure 12 illustrates circuit 35 while device 13 detects and is charged by a charger apparatus.

According to the embodiment illustrated in Figure 12, when the device 13 detects an external charger Qi apparatus, the device 13 operates in chargeable mode.

In such a mode, the Qi analog ping from the external apparatus in charger mode to the device 13 is demodulated, using an FSK demodulation via the Qi demodulator 55 and decoded by the controller 45 (link e)I).

The controller 45 uses the load modulator 57 to generate the responses via the matching circuit 39 (link e)II).

Then, the device 13 is being charged and the controller 45 communicates monitoring data to the application processor 41 (link e)III).

During this operating process, the controller 45 may use the secure element 43 in case it is needed to perform an authentication.

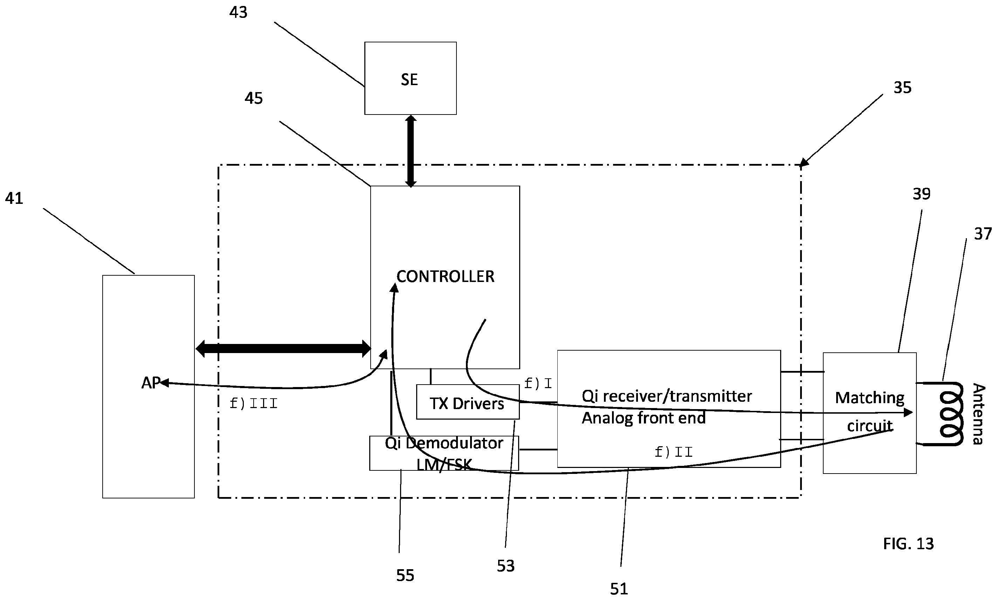

Figure 13 illustrates circuit 35 while device 13 detects and charges a chargeable apparatus.

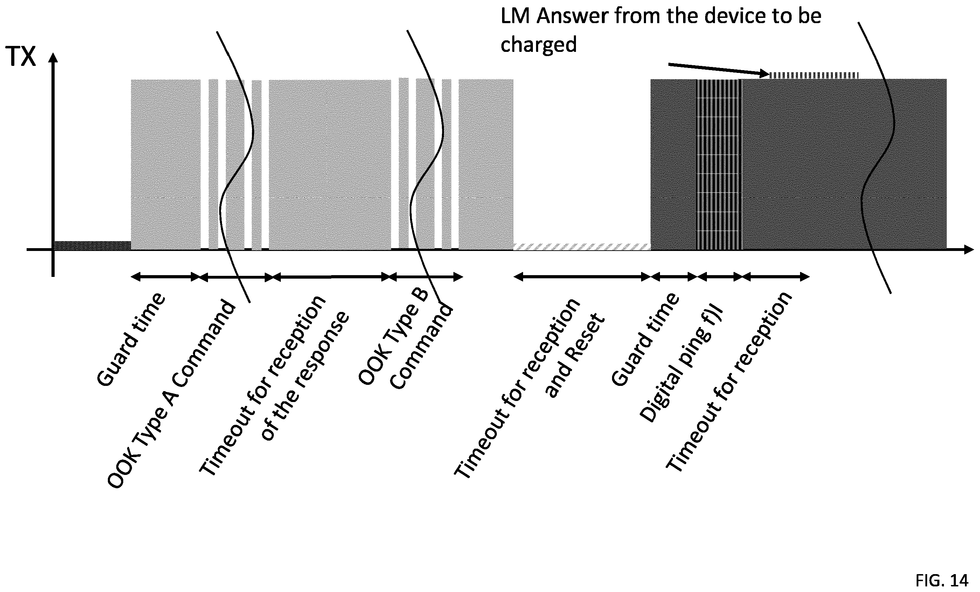

Figure 14 represents a time diagram of an example of frame 27 in the circuit 35 of Figure 13.

According to the embodiment illustrated in Figures 13 and 14, the detection of a chargeable apparatus is made after a lack of response to an RFID request (frame 27).

According to the embodiment illustrated in Figure 13, when the device 13 detects an external Qi apparatus in chargeable mode, the device 13 operates in charger mode.

In such a mode, the controller 45 sends, using an FSK modulation (link f)I) the digital Qi ping (Digital ping f)I, Figure 14) using the TX Drivers 53.

The response from the external apparatus (LM Answer from the device to be charged, Figure 14) is demodulated using a load demodulator 55 via the Qi demodulator 51 (link f)II) and decoded by the controller (link f)III).

Then, the device 13 charges the apparatus within range and the controller 45 communicates monitoring data to the application processor 41 (link f)III).

During this operating process, the controller 45 may use the secure element 43 in case it is needed to perform an authentication.

After establishing contact between the device 13 and the apparatus within the range, they both communicate by sending successive commands and responses. Any subsequent data packet received from an external charger apparatus can then be demodulated by the load demodulator 55.

According to the disclosed embodiments, during phase I illustrated in Figure 2, the device 13 is adapted to use, in listener mode, the Qi demodulator and the RFID demodulator in parallel, while during phase II, the device 13 is adapted to use the Qi demodulator and the RFID demodulator either successively (polling mode) or in parallel (listener mode).

An advantage of the described embodiments is that they make it possible to combine, within the same circuit, RFID LF and Qi technologies.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove. The invention is defined by the appended claims.

## Claims

1. Contactless access device adapted to communicate with other electronic devices using both Qi technology and Radio Frequency Identification, RFID, technology,
the device comprising a frequency demodulator (55) and an amplitude demodulator (59), and
the device being configured to use, in a first listening mode, both demodulators in parallel and to selectively activate, in a second mode in which both the frequency and
amplitude demodulators operate successively, either an RFID card mode or a Qi charger mode,
wherein the RFID card mode is activated if an on-off keying modulation is detected by the amplitude demodulator, and the Qi charger mode is activated if a frequency shift keying modulation is detected by the frequency demodulator, said detection being made during the first listening mode.

2. Method implemented by a contactless access device adapted to communicate with other electronic devices using both Qi technology and Radio Frequency Identification, RFID, technology, the device comprising a frequency demodulator (55) and an amplitude demodulator (59), in which the device uses, in a first listening mode (I), both demodulators in parallel and selectively activates, in a second mode in which both the frequency and amplitude demodulators operate successively,
either an RFID card mode or a Qi charger mode,
wherein the RFID card mode is activated if an on-off keying modulation is detected by the amplitude demodulator, and the Qi charger mode is activated if a frequency shift keying modulation is detected by the frequency demodulator, said detection being made during the first listening mode.

3. Device according to claim 1 or method according to claim 2, wherein both frequency and amplitude demodulators also include load modulators/demodulators.

4. Device according to any of claims 1 and 3 or method according to any of claims 2 and 3, wherein a load modulator (57) of the device is used when the device communicates with an external RFID A type apparatus configured in reader mode.

5. Device or method according to claim 4, wherein said load modulator (57) is used when the device is charged by an external apparatus and when it emulates an RFID card configured in type A.

6. Device according to any of claims 1, 3 to 5 or method according to any of claims 2 to 5, wherein a Qi analog front end (51) of the device is adapted to frequency modulate or amplitude modulate data when the device is in the second mode, the frequency modulated data being used to communicate with a Qi charger device and the amplitude modulated data being used to communicate with an RFID device configured in card mode.

7. Device according to any of claims 1, 3 to 6 or method according to any of claims 2 to 6, wherein the amplitude demodulator (59) is used to demodulate a response, in load modulation, of an external A type apparatus configured in card mode.

8. Device according to any of claims 1, 3 to 7 or method according to any of claims 2 to 7, wherein the amplitude demodulator (59) is used to demodulate a command received from an external apparatus configured in reader mode.

9. Device according to any of claims 1, 3 to 8 or method according to any of claims 2 to 8, wherein the frequency demodulator (55) is used to demodulate a response received from an external B type apparatus configured in card mode.

10. Device according to any of claims 1, 3 to 9 or method according to any of claims 2 to 9, wherein the frequency demodulator (55) is used to demodulate a digital ping or any subsequent data packet received from an external charging apparatus.

11. Device according to any of claims 1, 3 to 10 or method according to any of claims 2 to 10, wherein the frequency demodulator (55) is used to demodulate a response received from an external charger apparatus.

12. Device according to any of claims 1, 3 to 11 or method according to any of claims 2 to 11, wherein when the device detects an external field on an antenna, checks whether that field comes from an RFID apparatus or from a Qi apparatus.

13. Device or method according to claim 12, wherein the check is made by emitting periodic interrogation frames in RFID mode and Qi mode.

## Patentansprüche

1. Eine kontaktlose Zugangseinrichtung, die zur Kommunikation mit anderen elektronischen Einrichtungen sowohl die Qi-Technologie als auch die Radiofrequenz-Identifikationstechnologie (RFID) nutzt, wobei die Einrichtung einen Frequenzdemodulator (55) und einen Amplitudendemodulator (59) aufweist und die Einrichtung so konfiguriert ist, dass sie in einem ersten Zuhörmodus beide Demodulatoren parallel nutzt und in einem zweiten Modus, in dem sowohl der Frequenz- als auch der Amplitudendemodulator nacheinander arbeiten, entweder einen RFID-Kartenmodus oder einen Qi-Ladegerätmodus aktiviert, wobei der RFID-Kartenmodus aktiviert wird, wenn eine Ein-Aus-Modulationsmethode erkannt wird und der Qi-Ladegerätmodus aktiviert wird, wenn der Frequenzdemodulator eine Frequenzumtastungsmodulation erkennt, wobei die Erkennung während des ersten Zuhörmodus erfolgt.

2. Ein Verfahren, das von einer kontaktlosen Zugangseinrichtung implementiert wird, das für die Kommunikation mit anderen elektronischen Einrichtungen unter Verwendung sowohl der Qi-Technologie als auch der Radiofrequenz-Identifikationstechnologie (RFID) ausgelegt ist, wobei die Einrichtung einen Frequenzdemodulator (55) und einen Amplitudendemodulator (59) aufweist, wobei die Einrichtung in einem ersten Zuhörmodus (I) beide Demodulatoren parallel verwendet und, in einem zweiten Modus, in dem sowohl der Frequenz- als auch der Amplitudendemodulator nacheinander arbeiten, entweder einen RFID-Kartenmodus oder einen Qi-Lademodus selektiv aktiviert,
wobei der RFID-Kartenmodus aktiviert wird, wenn eine Ein-Aus-Modulation vom Amplitudendemodulator erkannt wird, und der Qi-Lademodus aktiviert wird, wenn eine Frequenzumtastungsmodulation vom Frequenzdemodulator erkannt wird,
wobei die Erkennung während des ersten Zuhörmodus erfolgt.

3. Einrichtung gemäß Anspruch 1 oder Verfahren gemäß Anspruch 2, wobei sowohl der Frequenz- als auch der Amplitudendemodulator auch Lastmodulatoren/-demodulatoren aufweisen.

4. Einrichtung gemäß einem der Ansprüche 1 und 3 oder Verfahren gemäß einem der Ansprüche 2 und 3, wobei ein Lastmodulator (57) der Einrichtung verwendet wird, wenn die Einrichtung mit einer externen RFID-Vorrichtung, konfiguriert gemäß Typ A, kommuniziert, das im Lesemodus konfiguriert ist.

5. Einrichtung oder Verfahren nach Anspruch 4, wobei der Lastmodulator (57) verwendet wird, wenn die Einrichtung von einer externen Vorrichtung aufgeladen wird und wenn sie eine RFID-Karte, konfiguriert gemäß Typ A, emuliert.

6. Einrichtung gemäß einem der Ansprüche 1, 3 bis 5 oder Verfahren gemäß einem der Ansprüche 2 bis 5, wobei ein Qi-Analog-Frontend (51) der Einrichtung so ausgelegt ist, dass es Daten frequenzmoduliert oder amplitudenmoduliert, wenn sich die Einrichtung im zweiten Modus befindet, wobei die frequenzmodulierten Daten zur Kommunikation mit einer Qi-Ladeeinrichtung verwendet werden und die amplitudenmodulierten Daten zur Kommunikation mit einer im Kartenmodus konfigurierten RFID-Einrichtung verwendet werden.

7. Einrichtung gemäß einem der Ansprüche 1, 3 bis 6 oder Verfahren gemäß einem der Ansprüche 2 bis 6, wobei der Amplitudendemodulator (59) verwendet wird, um eine Antwort in Lastmodulation einer externen Vorrichtung vom Typ A, die im Kartenmodus konfiguriert ist, zu demodulieren.

8. Einrichtung nach einem der Ansprüche 1, 3 bis 7 oder Verfahren nach einem der Ansprüche 2 bis 7, wobei der Amplitudendemodulator (59) verwendet wird, um einen Befehl zu demodulieren, der von einer externen Vorrichtung empfangen wird, die im Lesermodus konfiguriert ist.

9. Einrichtung nach einem der Ansprüche 1, 3 bis 8 oder Verfahren nach einem der Ansprüche 2 bis 8, wobei der Frequenzdemodulator (55) verwendet wird, um eine Antwort zu demodulieren, die von einer externen Vorrichtung vom Typ B empfangen wird, die im Kartenmodus konfiguriert ist.

10. Einrichtung gemäß einem der Ansprüche 1, 3 bis 9 oder Verfahren gemäß einem der Ansprüche 2 bis 9, wobei der Frequenzdemodulator (55) verwendet wird, um einen digitalen Ping oder ein nachfolgendes Datenpaket zu demodulieren, das von einer externen Ladevorrichtung empfangen wird.

11. Einrichtung nach einem der Ansprüche 1, 3 bis 10 oder Verfahren nach einem der Ansprüche 2 bis 10, wobei der Frequenzdemodulator (55) zum Demodulieren einer von einer externen Ladevorrichtung empfangenen Antwort verwendet wird.

12. Einrichtung nach einem der Ansprüche 1, 3 bis 11 oder Verfahren nach einem der Ansprüche 2 bis 11, wobei die Einrichtung, wenn sie ein externes Feld an einer Antenne erkennt, überprüft, ob dieses Feld von einer RFID-Vorrichtung oder von einer Qi-Vorrichtung stammt.

13. Einrichtung oder Verfahren nach Anspruch 12, wobei die Überprüfung durch Aussenden periodischer Abfrageframes im RFID-Modus und im Qi-Modus erfolgt.

## Revendications

1. Dispositif d'accès sans contact adapté à communiquer avec d'autres dispositif électroniques en utilisant à la fois la technologie Qi et la technologie d'identification par radiofréquence,
le dispositif comprenant un démodulateur de fréquence (55) et un démodulateur d'amplitude (59), et
le dispositif étant configuré pour utiliser, dans un premier mode d'écoute, les deux démodulateurs en parallèle et pour sélectivement activer, dans un deuxième mode dans lequel les deux démodulateurs de fréquence et d'amplitude fonctionnement successivement, soit un mode carte RFID ou un mode chargeur Qi,
dans lequel le mode carte RFID est activé si une modulation par tout ou rien est détectée par le démodulateur d'amplitude et le mode chargeur Qi est activé si une modulation par déplacement de fréquence détectée par le démodulateur de fréquence, ladite détection étant effectuée pendant le premier mode d'écoute.

2. Procédé mis en œuvre par un dispositif d'accès sans contact adapté à communiquer avec d'autres dispositif électroniques en utilisant à la fois la technologie Qi et la technologie d'identification par radiofréquence,
le dispositif comprenant un démodulateur de fréquence (55) et un démodulateur d'amplitude (59), dans lequel le dispositif utilise, dans un premier mode d'écoute (I), les deux démodulateurs en parallèle et active sélectivement, dans un deuxième mode dans lequel les deux démodulateurs de fréquence et d'amplitude fonctionnent successivement, soit un mode carte RFID ou un mode chargeur Qi,
dans lequel le mode carte RFID est activé si une modulation par tout ou rien est détectée par le démodulateur d'amplitude et le mode chargeur Qi est activé si une modulation par déplacement de fréquence détectée par le démodulateur de fréquence, ladite détection étant effectuée pendant le premier mode d'écoute.

3. Dispositif selon la revendication 1 ou procédé selon la revendication 2, dans lequel les deux démodulateurs de fréquence et d'amplitude comportent également des modulateurs/démodulateurs de charge.

4. Dispositif selon l'une quelconque des revendications 1 et 3 ou procédé selon l'une quelconque des revendications 2 et 3, dans lequel un modulateur de charge (57) du dispositif est utilisé lorsque le dispositif communique avec un appareil externe RFID de type A configuré en mode lecteur.

5. Dispositif ou procédé selon la revendication 4, dans lequel ledit modulateur de charge (57) est utilisé lorsque le dispositif est chargé par un appareil externe et lorsqu'il émule une carte RFID configurée en type A.

6. Dispositif selon l'une quelconque des revendications 1, 3 à 5 ou procédé selon l'une quelconque des revendications 2 à 5, dans lequel une tête analogique Qi (51) du dispositif est adaptée à moduler en fréquence ou moduler en amplitude des données lorsque le dispositif est dans le deuxième mode, les données modulées en fréquence étant utilisées pour communiquer avec un dispositif chargeur Qi et les données modulées en amplitude étant utilisées pour communiquer avec un dispositif RFID configuré en mode carte.

7. Dispositif selon l'une quelconque des revendications 1, 3 à 6 ou procédé selon l'une quelconque des revendications 2 à 6, dans lequel le démodulateur d'amplitude (59) est utilisé pour démoduler une réponse, en modulation de charge, d'un appareil externe de type A configuré en mode carte.

8. Dispositif selon l'une quelconque des revendications 1, 3 à 7 ou procédé selon l'une quelconque des revendications 2 à 7, dans lequel le démodulateur d'amplitude (59) est utilisé pour démoduler une commande reçue en provenance d'un appareil externe configuré en mode lecteur.

9. Dispositif selon l'une quelconque des revendications 1, 3 à 8 ou procédé selon l'une quelconque des revendications 2 à 8, dans lequel le démodulateur de fréquence (55) est utilisé pour démoduler une réponse reçue en provenance d'un appareil externe de type B configuré en mode carte.

10. Dispositif selon l'une quelconque des revendications 1, 3 à 9 ou procédé selon l'une quelconque des revendications 2 à 9, dans lequel le démodulateur de fréquence (55) est utilisé pour démoduler un ping numérique ou un quelconque paquet de données ultérieur reçu en provenance d'un appareil externe de charge.

11. Dispositif selon l'une quelconque des revendications 1, 3 à 10 ou procédé selon l'une quelconque des revendications 2 à 11, dans lequel le démodulateur de fréquence (55) est utilisé pour démoduler une réponse reçue en provenance d'un appareil externe de charge.

12. Dispositif selon l'une quelconque des revendications 1, 3 à 11 ou procédé selon l'une quelconque des revendications 2 à 11, dans lequel lorsque le dispositif détecte un champ externe sur une antenne, il vérifie si le champ provient d'un appareil RFID ou d'un appareil Qi.

13. Dispositif ou procédé selon la revendication 12, dans lequel la vérification est effectuée par l'émission de trames d'interrogation périodiques en mode RFID et en mode Qi.
